# EUROPEAN PATENT APPLICATION

(11) **EP 3 188 003 A1**
(43) Date of publication of application: **05.07.2017**
(21) Application number: 14900754.4
(22) Date of filing: 29.11.2014
(51) Int. Cl.: G06F 9/44

(54) **SYSTEM OPERATION METHOD AND SYSTEM OPERATION APPARATUS**

(30) Priority: 29.08.2014 CN 201410438053
(71) Applicant: Yulong Computer Telecommunication Scientific (Shenzhen) Co., Ltd., Shenzhen, Guangdong 518057 (CN)
(72) Inventor: HE, Xiaobing, Shenzhen Guangdong 518057 (CN)
(74) Representative: Cordina, Kevin John
(86) International application number: PCT/CN2014/092618
(87) International publication number: WO 2016/029579

(57) **Abstract**

The present disclosure provides an operation method of a system and an operation device of the system. The operation method of the system includes: setting target operation areas corresponding to each system of the plurality of systems on an operation interface of the terminal, according to a received setting command of a system operation area; operating a target system corresponding to the target operation area according to a first specified operation action when any of the target operation areas receives the first specified operation action. The present disclosure can realize to quickly access any of a plurality of systems and quickly invoke applications of any system to be operated.

## Description

### FIELD

The embodiments of the present disclosure relate to terminals technology field, and specifically to a system operating method and a system operating device.

### BACKGROUND

At present, a plurality of systems are installed in a terminal by some users. When the terminal is standby, a method for accessing systems usually includes firstly waking up a screen of the terminal by a power button, clicking a switching area of a security system, then accessing the system after inputting a correct password on a password inputting interface, to use applications in the system. The whole process is cumbersome, and it is inconvenient for the users.

Thus, quickly accessing any of multiple systems and quickly invoking applications in any system to operate are urgent problems to be solved.

### SUMMARY

Regarding the above-mentioned problems, the present disclosure provides a new technical solution, which can quickly access any of multiple systems and quickly invoking applications in any system to operate.

Therefore, according to one aspect of the present disclosure, a system operation method is provided. The system is any of a plurality of systems installed in a terminal, and an application is any of a plurality of applications in the terminal. The system operation method including: setting a target operation area corresponding to each system of the plurality of systems on an operation interface of the terminal, according to a received setting command of a system operation area; operating a target system corresponding to the target operation area according to a first specified operation action when any of the target operation areas receives the first specified operation action.

In this embodiment, by setting the target operation area corresponding to each system, a user may access any system without waking up a screen by a power button at first and without clicking a security system switching area. A target system is accessed and operated by merely inputting the first specified operation action in the corresponding target operation area directly, thus a procedure of accessing a system and operating applications in the system is simplified for the user, and a system or an application in an operating system can be accessed quickly. Certainly, a plurality of operations can be directly executed on the target system through the first specified operation action, such as, opening the target system, closing the target system and switching the target system by inputting the first specified operation action in the target operation area.

In the above embodiment, preferably, the operating method further includes: after accessing the target system, according to a second specified operation action received by the target system, operating a target application in the target system corresponding to the second specified operation action.

In this embodiment, when the user accesses the system, the target application of the target system is operated through the second specified operation action (it is the equivalent of a shortcut of operating the target application). It is conducive to satisfy demands of different users and to improve user experiences.

In the above embodiment, preferably, the operating method further includes: setting a predetermined operation time and/or a predetermined sliding rate of the first specified operation action according to the received setting command; when any of the target operation areas receives any operation action, determining whether the any operation action is the first specified operation action according to a duration and the predetermined operation time of the any operation action, and/or determining whether the any operation action is the first specified operation action according to a sliding rate and the predetermined sliding rate of the any operation action.

In this embodiment, as each first specified operation action has a predetermined operation time and/or a predetermined sliding rate, thus, when any of the target operation areas receives any operation action, it is determined whether the any operation action is the first specified operation action by determining whether a duration of the any operation action is matched with the predetermined operation time, and/or whether a sliding rate of the any operation action is matched with the predetermined sliding rate. According to a determining result, it is determined whether the target application is operated through the any operation action. For example, after determining that the duration of the any operation action is not matched with the predetermined operation time, and/or the sliding rate of the any operation action is not matched with the predetermined sliding rate, it is determined that the any operation action is not the first specified operation action, and the any operation action is misoperation. Thus, the any operation action cannot operate the target application.

In the above embodiment, the operating method further includes: according to a received changing command, changing the first specified operation action and/or the second specified operation action, or the target operation area corresponding to the target system.

In this embodiment, the user can be free to change the first specified operation action and/or the second specified operation action according to individual demands, and to change the target operation area corresponding to the target system. It is conducive to satisfy the demands of different users and to improve the user experiences. For example, when a terminal includes a system A and a system B, target operation areas originally corresponding to the system A and the system B are respectively an upper section of an operating interface of the terminal and a lower section of the operating interface, specified operation actions for invoking a message application of the system A and the system B are sliding a S curve and a W curve respectively. When usage habits of the user are changed, the target operation areas corresponding to the system A and the system B are changed to be a left section of the operating interface of the terminal and a right section of the operating interface, the specified operation actions for invoking the message application of the system A and the system B are changed to be sliding a Z curve and a Y curve.

In the above embodiment, preferably, the first specified operation action and the second specified operation action include: multiple clicks, long press and/or sliding in a predetermined way.

In this embodiment, the user can access the target system or operate applications of the target system by clicking or long press, meanwhile, the user can access the target system or operate the applications in the target system by setting a predetermined curve. For example, the user can predetermine a function of a M curve is accessing a target system A, when the user slips the M curve on a target operation area of the system A, the target system A is accessed. If the function of the M curve is predetermined to be opening the WECHAT^{™} application of the system A, when the user accesses the system A and slips the M curve, the WECHAT^{™} application of the system A is opened.

According to one aspect of the present disclosure, a system operation device is provided. The system is any of a plurality of systems installed in a terminal, and an application is any of a plurality of applications in the terminal. The operating device includes: a setting unit, which sets a target operation area corresponding to each system of the plurality of systems on an operation interface of the terminal according to a received setting command of a system operation area; an operation unit, which operates a target system corresponding to the target operation area according to a first specified operation action when any of the target operation areas receives a first specified operation action.

In this embodiment, by setting the target operation area corresponding to each system, a user may access any system without waking up a screen by a power button at first and without clicking a security system switching area. A target system is accessed and operated by merely inputting the first specified operation action in the corresponding target operation area directly, thus a procedure of accessing a system and operating applications in the system is simplified for the user, and a system or an application in an operating system can be accessed quickly. Certainly, a plurality of operations can be directly executed on the target system through the first specified operation action, such as, opening the target system, closing the target system and switching the target system by inputting the first specified operation action in the target operation area.

In the above embodiment, preferably, the operation unit is further configured to: after accessing the target system, according to a second specified operation action received by the target system, operate a target application in the target system corresponding to the second specified operation action.

In this embodiment, when the user accesses the system, the target application of the target system is operated through the second specified operation action (it is the equivalent of a shortcut of operating the target application). It is conducive to satisfy demands of different users and to improve user experiences.

In the above embodiment, preferably, the setting unit is configured to set a predetermined operation time and/or a predetermined sliding rate of the first specified operation action according to the received setting command; when any of the target operation areas receives any operation action. And the operating device further includes: a determination unit, which determines whether the any operation action is the first specified operation action according to a duration and the predetermined operation time of the any operation action, and/or determines whether the any operation action is the first specified operation action according to a sliding rate and the predetermined sliding rate of the any operation action.

In this embodiment, as each first specified operation action has a predetermined operation time and/or a predetermined sliding rate, thus, when any of the target operation areas receives any operation action, it is determined whether the any operation action is the first specified operation action by determining whether a duration of the any operation action is matched with the predetermined operation time, and/or whether a sliding rate of the any operation action is matched with the predetermined sliding rate. According to a determining result, it is determined whether the target application is operated through the any operation action. For example, after determining that the duration of the any operation action is not matched with the predetermined operation time, and/or the sliding rate of the any operation action is not matched with the predetermined sliding rate, it is determined that the any operation action is not the first specified operation action, and the any operation action is misoperation. Thus, the any operation action cannot operate the target application.

In the above embodiment, the operating device further includes: a changing unit, which changes the first specified operation action and/or the second specified operation action, or the target operation area corresponding to the target system according to the received changing command.

In this embodiment, the user can be free to change the first specified operation action and/or the second specified operation action according to individual demands, and to change the target operation area corresponding to the target system. It is conducive to satisfy the demands of different users and to improve the user experiences. For example, when a terminal includes a system A and a system B, target operation areas originally corresponding to the system A and the system B are respectively an upper section of an operating interface of the terminal and a lower section of the operating interface, specified operation actions for invoking a message application of the system A and the system B are sliding a S curve and a W curve respectively. When usage habits of the user are changed, the target operation areas corresponding to the system A and the system B are changed to be a left section of the operating interface of the terminal and a right section of the operating interface, the specified operation actions for invoking the message application of the system A and the system B are changed to be sliding a Z curve and a Y curve.

In the above embodiment, preferably, the first specified operation action and the second specified operation action include: multiple clicks, long press and/or sliding in a predetermined way.

In this embodiment, the user can access the target system or operate applications of the target system by clicking or long press, meanwhile, the user can access the target system or operate the applications in the target system by setting a predetermined curve. For example, the user can predetermine a function of a M curve is accessing a target system A, when the user slips the M curve on a target operation area of the system A, the target system A is accessed. If the function of the M curve is predetermined to be opening the WECHAT^{™} application of the system A, when the user accesses the system A and slips the M curve, the WECHAT^{™} application of the system A is opened.

Through the above embodiment, quickly accessing any of multiple systems and quickly invoking applications in any system to be operated are resolved.

### BRIEF DESCRIPTION OF THE DRAWINGS

FIG. 1 shows a schematic flowchart of a system operating method in one embodiment of the present disclosure;
FIG. 2A and FIG. 2B show a schematic diagram of operations on system or an application in one embodiment of the present disclosure.
FIG. 3 shows a schematic structure diagram of a system operating device in one embodiment of the present disclosure.

### DETAILED DESCRIPTION

For clarity of illustration of objectives, features and advantages of the present disclosure, where appropriate, the above drawings combined with detailed description illustrate the embodiments of the present disclosure hereinafter. It may be appreciated that different embodiments and elements in the different embodiment of the present disclosure can be combined, when there is no complicit.

The embodiments described herein are for better understanding of the present disclosure, other embodiments can also be practiced. The description is not to be considered as limiting the scope of the embodiments described herein.

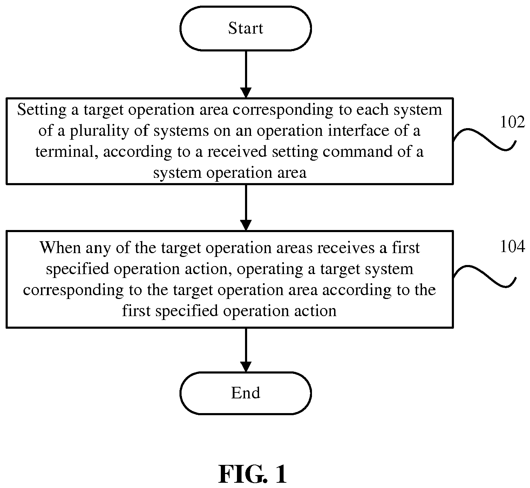

FIG. 1 shows a schematic flowchart of a system operating method in one embodiment of the present disclosure.

As shown in FIG. 1, the operating method of the system in one embodiment of the present disclosure includes: step 102, according to a received setting command of a system operation area, setting a target operation area corresponding to each system of a plurality of systems on an operation interface of the terminal; step 104, when any target operation area receives a first specified operation action, operating a target system corresponding to the target operation area according to the first specified operation action.

In this embodiment, by setting the target operation area corresponding to each system, a user may access any system without waking up a screen by a power button at first and without clicking a security system switching area. A target system is accessed and operated by merely inputting the first specified operation action in the corresponding target operation area directly, thus a procedure of accessing a system and operating applications in the system is simplified for the user, and a system or an application in an operating system can be accessed quickly. Certainly, a plurality of operations can be directly executed on the target system through the first specified operation action, such as, opening the target system, closing the target system and switching the target system by inputting the first specified operation action in the target operation area.

In the above embodiment, preferably, the operating method further includes: after accessing the target system, according to a second specified operation action received by the target system, operating a target application in the target system corresponding to the second specified operation action.

In this embodiment, when the user accesses the system, the target application of the target system is operated through the second specified operation action (it is the equivalent of a shortcut of operating the target application). It is conducive to satisfy demands of different users and to improve user experiences.

In the above embodiment, preferably, the operating method further includes: setting a predetermined operation time and/or a predetermined sliding rate of the first specified operation action according to the received setting command; when any of the target operation areas receives any operation action, determining whether the any operation action is the first specified operation action according to a duration and the predetermined operation time of the any operation action, and/or determining whether the any operation action is the first specified operation action according to a sliding rate and the predetermined sliding rate of the any operation action.

In this embodiment, as each first specified operation action has a predetermined operation time and/or a predetermined sliding rate, thus, when any of the target operation areas receives any operation action, it is determined whether the any operation action is the first specified operation action by determining whether a duration of the any operation action is matched with the predetermined operation time, and/or whether a sliding rate of the any operation action is matched with the predetermined sliding rate. According to a determining result, it is determined whether the target application is operated through the any operation action. For example, after determining that the duration of the any operation action is not matched with the predetermined operation time, and/or the sliding rate of the any operation action is not matched with the predetermined sliding rate, it is determined that the any operation action is not the first specified operation action, and the any operation action is misoperation. Thus, the any operation action cannot operate the target application.

In the above embodiment, the operating method further includes: according to a received changing command, changing the first specified operation action and/or the second specified operation action, or the target operation area corresponding to the target system.

In this embodiment, the user can be free to change the first specified operation action and/or the second specified operation action according to individual demands, and to change the target operation area corresponding to the target system. It is conducive to satisfy the demands of different users and to improve the user experiences. For example, when a terminal includes a system A and a system B, target operation areas originally corresponding to the system A and the system B are respectively an upper section of an operating interface of the terminal and a lower section of the operating interface, specified operation actions for invoking a message application of the system A and the system B are sliding a S curve and a W curve respectively. When usage habits of the user are changed, the target operation areas corresponding to the system A and the system B are changed to be a left section of the operating interface of the terminal and a right section of the operating interface, the specified operation actions for invoking the message application of the system A and the system B are changed to be sliding a Z curve and a Y curve.

In the above embodiment, preferably, the first specified operation action and the second specified operation action include: multiple clicks, long press and/or sliding in a predetermined way.

In this embodiment, the user can access the target system or operate applications of the target system by clicking or long press, meanwhile, the user can access the target system or operate the applications in the target system by setting a predetermined curve. For example, the user can predetermine a function of a M curve is accessing a target system A, when the user slips the M curve on a target operation area of the system A, the target system A is accessed. If the function of the M curve is predetermined to be opening the WECHAT^{™} application of the system A, when the user accesses the system A and slips the M curve, the WECHAT^{™} application of the system A is opened.

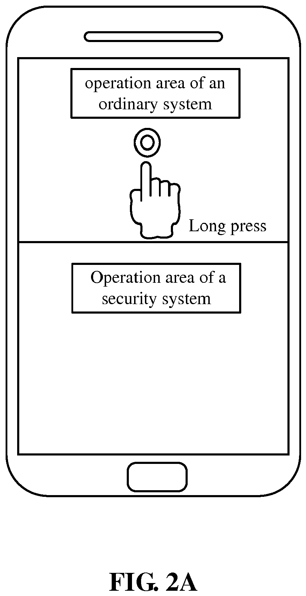

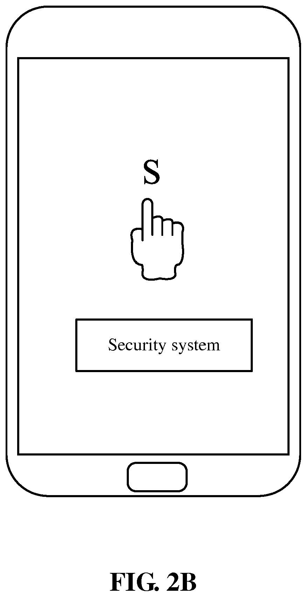

FIG. 2A and FIG. 2B show a schematic diagram of operating the system or an application in one embodiment of the present disclosure.

In this embodiment, the terminal is currently standby, an ordinary system and a security system are installed in the terminal. Combining with detail descriptions in the FIG. 2A and FIG. 2B, the operating method of the system includes:

Setting a target operation area of the ordinary system on the operating interface of the terminal to be an upper section of the operating interface, setting a target operation area of the security system to be a lower section of the operating interface, meanwhile, setting a specified operation action of accessing the ordinary system to be a long press action, setting a specified operation action of opening the notepad application of the security system to be sliding a curve S.

When the user wishes to access the ordinary system, the ordinary system can be accessed by a long press on the operation area of the ordinary system (as shown in FIG. 2A). When the user wishes to open the Notepad of the security system, the security system can be accessed, the Notepad of the security system is opened by sliding a curve S on the security system(as shown in FIG. 2B).

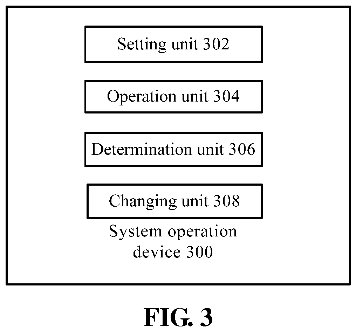

FIG. 3 shows a schematic structure diagram of a system operating device in one embodiment of the present disclosure.

As shown in FIG. 3, according to one embodiment of the present disclosure, the operating device 300 includes: a setting unit 302, which sets a target operation area corresponding to each system of the plurality of systems on an operation interface of the terminal according to a received setting command of a system operation area; an operation unit 304, which operates a target system corresponding to the target operation area according to a first specified operation action when any of the target operation areas receives a first specified operation action.

In this embodiment, by setting the target operation area corresponding to each system, a user may access any system without waking up a screen by a power button at first and without clicking a security system switching area. A target system is accessed and operated by merely inputting the first specified operation action in the corresponding target operation area directly, thus a procedure of accessing a system and operating applications in the system is simplified for the user, and a system or an application in an operating system can be accessed quickly. Certainly, a plurality of operations can be directly executed on the target system through the first specified operation action, such as, opening the target system, closing the target system and switching the target system by inputting the first specified operation action in the target operation area.

In the above embodiment, preferably, the operation unit 304 is further configured to: after accessing the target system, according to a second specified operation action received by the target system, operate a target application in the target system corresponding to the second specified operation action.

In this embodiment, when the user accesses the system, the target application of the target system is operated through the second specified operation action (it is the equivalent of a shortcut of operating the target application). It is conducive to satisfy demands of different users and to improve user experiences.

In the above embodiment, preferably, the setting unit 302 is configured to set a predetermined operation time and/or a predetermined sliding rate of the first specified operation action according to the received setting command; when any of the target operation areas receives any operation action. And the operating device 300 further includes: a determination unit 306, which determines whether the any operation action is the first specified operation action according to a duration and the predetermined operation time of the any operation action, and/or determines whether the any operation action is the first specified operation action according to a sliding rate and the predetermined sliding rate of the any operation action.

In this embodiment, as each first specified operation action has a predetermined operation time and/or a predetermined sliding rate, thus, when any of the target operation areas receives any operation action, it is determined whether the any operation action is the first specified operation action by determining whether a duration of the any operation action is matched with the predetermined operation time, and/or whether a sliding rate of the any operation action is matched with the predetermined sliding rate. According to a determining result, it is determined whether the target application is operated through the any operation action. For example, after determining that the duration of the any operation action is not matched with the predetermined operation time, and/or the sliding rate of the any operation action is not matched with the predetermined sliding rate, it is determined that the any operation action is not the first specified operation action, and the any operation action is misoperation. Thus, the any operation action cannot operate the target application.

In the above embodiment, the operating device further includes: a changing unit 308, which changes the first specified operation action and/or the second specified operation action, or the target operation area corresponding to the target system according to the received changing command.

In this embodiment, the user can be free to change the first specified operation action and/or the second specified operation action according to individual demands, and to change the target operation area corresponding to the target system. It is conducive to satisfy the demands of different users and to improve the user experiences. For example, when a terminal includes a system A and a system B, target operation areas originally corresponding to the system A and the system B are respectively an upper section of an operating interface of the terminal and a lower section of the operating interface, specified operation actions for invoking a message application of the system A and the system B are sliding a S curve and a W curve respectively. When usage habits of the user are changed, the target operation areas corresponding to the system A and the system B are changed to be a left section of the operating interface of the terminal and a right section of the operating interface, the specified operation actions for invoking the message application of the system A and the system B are changed to be sliding a Z curve and a Y curve.

In the above embodiment, preferably, the first specified operation action and the second specified operation action include: multiple clicks, long press and/or sliding in a predetermined way.

In this embodiment, the user can access the target system or operate applications of the target system by clicking or long press, meanwhile, the user can access the target system or operate the applications in the target system by setting a predetermined curve. For example, the user can predetermine a function of a M curve is accessing a target system A, when the user slips the M curve on a target operation area of the system A, the target system A is accessed. If the function of the M curve is predetermined to be opening the WECHAT^{™} application of the system A, when the user accesses the system A and slips the M curve, the WECHAT^{™} application of the system A is opened.

The above drawings combined with detailed description illustrate the embodiments of the present disclosure. Quickly accessing any of multiple systems and quickly invoking applications in any system to be operated are resolved.

The above mentioned embodiments are only preferable embodiments. The present disclosure is not to be construed as being limited thereto. It is obvious that the present disclosure has various changes or modifications for persons skilled in the art. Any change or equivalent replacements or modifications may be made to the present disclosure without departing from the scope and spirit of the present disclosure.

## Claims

1. A system operating method, the system being any of a plurality of systems installed in a terminal, an application being any of a plurality of applications in the terminal, comprising:
setting a target operation area corresponding to each system of the plurality of systems on an operation interface of the terminal, according to a received setting command of a system operation area;
operating a target system corresponding to the target operation area according to a first specified operation action when any of the target operation areas receives the first specified operation action.

2. The operating method of the system of claim 1, further comprising:
operating a target application in the target system corresponding to a second specified operation action after accessing the target system, according to the second specified operation action received by the target system.

3. The operating method of the system of claim 1, further comprising:
setting a predetermined operation time and/or a predetermined sliding rate of the first specified operation action according to the received setting command;
determining whether any operation action is the first specified operation action according to a duration and the predetermined operation time of the any operation action, and/or determining whether the any operation action is the first specified operation action according to a sliding rate and the predetermined sliding rate of the any operation action, when any of the target operation areas receives the any operation action.

4. The operating method of the system of claim 1, further comprising:
changing the first specified operation action and/or the second specified operation action, or the target operation area corresponding to the target system according to a received changing command.

5. The operating method of the system of any of claims 1 to 4, wherein the first specified operation action and the second specified operation action comprises: multiple clicks, long press and/or sliding with a predetermined way.

6. A system operating device, the system being any of a plurality of systems installed in a terminal, an application being any of a plurality of applications in the terminal, comprising:
a setting unit, which sets a target operation area corresponding to each system of the plurality of systems on an operation interface of the terminal according to a received setting command of a system operation area;
an operation unit, which operates a target system corresponding to the target operation area according to a first specified operation action when any of the target operation areas receives a first specified operation action.

7. The system operating device of claim 6, wherein the operation unit is further configured to:
operate a target application in the target system corresponding to a second specified operation action after accessing the target system, according to the second specified operation action received by the target system.

8. The system operating device of claim 6, wherein the setting unit is further configured to set a predetermined operation time and/or a predetermined sliding rate of the first specified operation action according to the received setting command; and
the device further comprises:
a determination unit, to determine whether any operation action is the first specified operation action according to a duration and the predetermined operation time of the any operation action, and/or to determine whether the any operation action is the first specified operation action according to a sliding rate and the predetermined sliding rate of the any operation action, when any of the target operation areas receives the any operation action.

9. The system operating device of claim 6, further comprising:
a changing unit, to change the first specified operation action and/or the second specified operation action, or the target operation area corresponding to the target system according to a received changing command.

10. The system operating device of any of claims 6 to 9, wherein the first specified operation action and the second specified operation action comprises: multiple clicks, long press and/or sliding with a predetermined way.
